# EUROPÄISCHE PATENTSCHRIFT

(11) **EP 0 561 265 B1**
(45) Veröffentlichungstag und Bekanntmachung des Hinweises auf die Patenterteilung: **03.07.1996**
(21) Anmeldenummer: 93103853.3
(22) Anmeldetag: 10.03.1993
(51) Int. Cl.: B01D 19/04, A01N 25/12, A01N 25/14

(54) **Entschäumer für feste Pflanzenschutzmittel**
Defoamer for solid plant protectives
Antimousse pour produits solides protectifs pour plantes

(30) Priorität: 17.03.1992 DE 4208514
(43) Veröffentlichungstag der Anmeldung: 22.09.1993
(73) Patentinhaber: Hoechst Schering AgrEvo GmbH, D-13342 Berlin (DE)
(72) Erfinder: Kocur, Jean, Dr., W-6238 Hofheim/Ts (DE)

(56) Entgegenhaltungen:
- EP-A- 0 407 874
- DE-A- 2 233 941
- DE-A- 2 546 845
- DE-A- 3 926 800

## Beschreibung

Die Erfindung betrifft die Verwendung bestimmter Perfluoralkylphosphinsäuren und -phosphonsäuren als Entschäumer in festen Pflanzenschutzmitteln.

Feste Pflanzenschutzmittel werden heute meist in Form Von Spritzpulvern und Granulaten, insbesondere in Form wasserdispergierbarer Granulate angeboten; siehe z. B. die DE-A-2546845 und DE-A-3926800.

Es ist bekannt, daß bei der Herstellung dieser Formulierungen herbizider, fungizider oder insektizider Wirkstoffe neben inerten Füllmaterialien wie Kreide, Kaolin oder Kieselsäure insbesondere oberflächenaktive Stoffe eingesetzt werden damit die Präparate bei ihrer Anwendung in Wasser gut benetzt und dispergiert werden. Im Falle der wasserdispergierbaren Granulate soll zusätzlich schnelle Desintegration nach Eintragen in Wasser erfolgen.

Darüber hinaus ist bekannt, daß die oberflächenaktiven Stoffe, besonders Netzmittel, häufig zur Wirkungsverstärkung, insbesondere von Blattherbiziden beitragen und dann mit besonders hohem Anteil in den Formulierungen eingesetzt werden (DE-A-3 926 800).

Netzmittel erniedrigen außerdem die Oberflächenspannung der Spritzbrühe. Dadurch ist eine gleichmäßige Benetzung der Blattoberfläche und damit verbunden oft eine bessere Aufnahme der Wirkstoffe gewährleistet. Wegen der niedrigen Oberflächenspannung neigen diese Spritzbrühen aber auch zum Schäumen. Dies kann zum Überlaufen des Spritztankes und zu ungleichmäßigen Spritzbelägen auf den Pflanzen führen.

Die Verwendung eines Antischaummittels als Additiv, das der Spritzbrühe separat zugesetzt wird, kann oft Abhilfe schaffen. Der Einsatz als Additiv erfordert jedoch neben dem Pflanzenschutzmittel und ggf. einem zusätzlichen Netzmittel den Gebrauch eines weiteren Mittels und wird in der Praxis wegen der erforderlichen zusätzlichen Dosierung und Lagerhaltung nicht gerne angewendet.

Es besteht daher die Aufgabe, Entschäumer für feste Formulierungen von Pflanzenschutzmitteln zu finden, die einfach zu handhaben sind, die ihre Aktivität im Zuge des Formulierungsprozesses nicht verlieren und deren Aktivität während der Lagerung der Präparate über 2 bis 4 Jahre erhalten bleibt.

Es ist eine Vielzahl von Entschäumern bekannt, über die z.B. in "Ullmanns Enzyklopädie der technischen Chemie", 4. Auflage, Band 20, Seiten 411-414 und von W. Schönfeldt in "Grenzflächenaktive Alkylenoxid-Addukte", Wissenschaftliche Verlagsgesellschaft MBM, Stuttgart 1973, Seiten 805-853 berichtet wird.

Die dort genannten Stoffe sind jedoch für die Herstellung von festen Formulierungen von Pflanzenschutzmitteln nicht immer geeignet, weil sie aufgrund ihrer flüssigen oder pastösen Beschaffenheit oder ihres niedrigen Schmelzpunktes nicht bei der Herstellung von Spritzpulvern durch Vermahlung eingesetzt werden können, oder weil sie während des Formulierungsprozesses ihre Aktivität verlieren. So verlieren z.B. hochwirksame Silicon-Antischaumemulsionen teilweise ihre entschäumenden Eigenschaften wenn sie hohen Scherkräften ausgesetzt sind, wie sie z.B. bei der Herstellung von wasserdispergierbaren Granulaten durch Sprühtrocknung oder Wirbelbettgranulierung wäßriger Suspensionen auftreten. Werden die gut wirksamen Siliconentschäumer auf Pulverbasis eingesetzt, so müssen sie den festen Formulierungen nach deren Fertigstellung durch Mischen zugegeben werden. Das Verfahren erfordert den Einsatz geeigneter Mischapparate und einen zusätzlichen Arbeitsgang. Abriebempfindliche Aufbaugranulate können durch den Mischvorgang geschädigt werden.

Andere feste Entschäumer wie z.B. Aluminiumstearat sind insbesondere bei hohem Netzmitteleinsatz in den Formulierungen nicht ausreichend wirksam.

Die Verwendung von Entschäumern aus der chemischen Gruppe der Perfluor-(C₆-C₁₈)-alkylphosphinsäuren und/oder Perfluor-(C₆-C₁₈)-alkylphosphonsäuren und/oder deren Salze in flüssigen, tensidhaltigen Systemen ist ebenfalls bekannt (DE-A-22 33 941 und DE-A-40 21 336). In der EP-A-0 407 874 sind wäßrige Zubereitungen, welche diese Entschäumer in Kombination mit Netzmitteln und Pflanzenschutzmitteln enthalten, offenbart. Die Einarbeitung der Entschäumer in die flüssigen Systeme erfolgt in der Regel durch Zusatz unter langsamem Rühren.

In der DE-A-22 33 941 wird, ohne Angabe eines Beispieles, auch erwähnt, daß diese Verbindungen in feste Mischungen anderer Substanzen, wie Tenside, "Farbstoffe, Druckpasten usw. eingearbeitet" werden können.

Überraschenderweise wurde nun gefunden, daß diese Substanzen auch unter starker mechanischer Beanspruchung - wie sie z.B. beim Mahlen von Spritzpulverformulierungen auf Schlagkreuzmühlen oder beim Naßvermahlen von Wirkstoffen auf Perlmühlen zu wäßrigen Suspensionen und deren anschließende Granulierung durch Sprühtrocknung mittels Einstoffdüse oder im Wirbelbett auftreten - ihre entschäumende Wirkung nicht verlieren.

Die Erfindung betrifft daher feste Zubereitungen von Wirkstoffen, die im Pflanzenschutz eingesetzt werden, und die oberflächenaktive Stoffe (Netzmittel) enthalten, in Kombination mit einem Tensid (Entschäumer) aus der chemischen Gruppe der Perfluoralkylphosphinsäuren und/oder Perfluoralkylphosphonsäuren und/oder deren Salze, sowie Verfahren zu deren Herstellung.

Der Anteil des Entschäumers an der Formulierung kann bis zu 10 Gew.-% betragen, im allgemeinen werden jedoch 0,1 bis 5 Gew.-%, vorzugsweise 0,1 bis 5 Gew.-%, insbesondere 0,2 bis 2 Gew.-% eingesetzt.

Die Zubereitung enthält weiter 2 bis 60 Gew.-%, vorzugsweise 5 bis 50 Gew.-% eines oder mehrerer Netzmittel, vorzugsweise aus der Gruppe der Alkansulfonate, Alkylnaphthalinsulfonate, Alkylbenzolsulfonate, Alkylpolyglykolethersulfonate, Alkylsulfobernsteinsäurehalbester, Fettsäure-N-methytauride oder Gemische der vorstehenden Netzmittel.

Zu den Wirkstoffen, die in Form fester Formulierungen angeboten werden können, gehören alle geeigneten biologisch wirksamen organischen Verbindungen, bevorzugt Herbizide und Safener, Insektizide, Fungizide, Akarizide, Nematizide, Pheromone und Repellents, insbesondere herbizide Wirkstoffe, wie Glufosinatammonium, Glyphosate, Bialaphos, Wirkstoffe aus der Phenoxyreihe, wie CMPP, MCPA, 2,4-D, Wirkstoffe aus der Phenoxyphenoxyreihe wie Diclofopmethyl oder der Heteroaryloxyphenoxyreihe wie Fenoxapropethyl, Fenoxaprop-P-ethyl, Wirkstoffe aus der Harnstoffreihe, wie Isoproturon, Diuron, Linuron, Monolinuron, Chlortoluron, Wirkstoffe aus der Reihe der Sulfonylharnstoffe, wie Amidosulfuron, Tribenuron (DPX-L53OO), Thiameturonmethyl (DPX-M6316), Metsulfuron-methyl (DPX-T6376), Primisulfuron-methyl, Nicosulfuron, Wirkstoffe aus der Reihe der Triazine, wie Atrazin oder Simazin, Wirkstoffe aus der Reihe der Imidazolinone, wie Imazapyr, Imazaquin, Imazethapyr, Imazamethabenz, Diphenyletherderivate, z.B. Acifluorfen, Fluoroglycofen, Lactofen, Bifenox, Dicotylen-Herbizide, z.B. Ioxynil, Bromoxynil, Dicamba, Diflufenican, Fluoroxypyr, Phenmedipham, Desmedipham, Bentazone, Metamitron, Metribuzin, Chloridazon, Ethofumesat oder der Wirkstoff Trifluralin und Safener, wie z.B. die in EP-A-86750, EP-A-94349, EP-A-191736, EP-A-346620, EP-A-333131, EP-A-269806, EP-A-159290, DE-A-2546845, PCT/EP-90/02020 und PCT/EP-90/01966 beschriebenen Verbindungen;
fungizide Wirkstoffe, wie z.B. Wirkstoffe aus der Reihe der Azole, z.B. Triadimefon, Cyproconazol, Myclobutanil, Dichlobutrazol, Wirkstoffe aus der Reihe der Dithiocarbamate, wie Maneb, Zineb, Mancozeb, der Benzimidazole, z.B. Carbendazim oder Wirkstoffe, wie z.B. Procymidone, Iprodione, Vinchlozolin, Thiophanate-methyl, Cymoxanil, Folpet, Kupferoxichlorid, Schwefel oder TPTH;
insektizide Wirkstoffe, wie z.B. Wirkstoffe aus der Reihe der Pyrethroide, wie Deltamethrin, Acrinathrin, Tralomethrin, Permethrin, Cypermethrin, Wirkstoffe aus der Benzoylharnstoffreihe, wie Diflubenzuron oder Wirkstoffe, wie z.B. Endosulfan, Pirimicarb oder Silafluofen.

Die genannten Wirkstoffe können auch in Kombination untereinander in Form fester Formulierungen angeboten werden. Der Wirkstoffgehalt beträgt in der Regel 1 bis 80 Gew.-%, vorzugsweise 5 bis 60 Gew.-%.

Als perfluoralkylgruppenhaltige Tenside eignen sich insbesondere Perfluor-(C₆-C₁₂)-alkylphosphinsäuren und -phosphonsäuren und deren Alkalimetallsalze, wie Natrium- oder Kaliumsalze, deren Ammoniumsalze, (C₂-C₁₈)-Alkylammoniumsalze sowie Salze mit (C₁₀-C₁₈)-Alkylaminethoxylaten und Ethylendiaminethoxylaten oder deren Mischungen. Die perfluoralkylgruppenhaltigen Tenside sind im Handel erhältlich, z.B. ®Fluowet PP (Mischung von (C₆-C₁₂)-Perfluoralkylphosphin- und -alkylphosphonsäuren, Hoechst) oder können nach bekannten Methoden (DE-A 21 11 167) hergestellt werden.

Die festen Formulierungen können neben den genannten Wirkstoffen, den gefundenen wirkungsvollen Entschäumern und Netzmitteln noch weitere übliche Formulierungshilfsmittel, wie z.B. Dispergiermittel, Agglomerationshilfen, Stabilisatoren, inerte Füllstoffe und wasserlösliche Stoffe, z.B. Ammoniumsulfat, Harnstoff oder Natriumsulfat enthalten, wobei der Gehalt an diesen Stoffen in der Regel 0 bis 70 Gew.-%, vorzugsweise 5 bis 50 Gew.-% beträgt.

Die genannten Wirkstoffe sind ebenfalls bekannt und in "Pesticide Manual" (by the British Crop Protection Council) oder in "Farm Chemicals Handbook 91" (Meister Publishing Company, Willoughby, Ohio) beschrieben.

Die genannten perfluoralkylgruppenhaltigen Entschäumer können auch in Kombination mit Entschäumern anderer Stoffklassen eingesetzt werden, insbesondere in Kombination mit Entschäumern auf Siliconbasis.

Durch die erfindungsgemäß verwendeten perfluoralkylgruppenhaltigen Tenside ist es möglich, Spritzpulverformulierungen oder Granulatformulierungen, insbesondere auch wasseremulgierbare Granulate mit Entschäumern zu versehen, die weder bei der Herstellung noch bei der Lagerung der Produkte über 2 bis 4 Jahre ihre Aktivität verlieren.

Neben den genannten Wirkstoffen, den erfindungsgemäß verwendeten perfluoralkoxygruppenhaltigen Tensiden und Netzmittel sowie gegebenenfalls weiteren üblichen Formulierungshilfsmitteln können die genannten wasseremulgierbaren Granulate ein hochsiedendes Lösungsmittel oder Lösungsmittelgemisch enthalten. Sie enthalten außerdem ein zumindest teilweise wasserlösliches hüll- und strukturbildendes Material, das vorzugsweise im wesentlichen aus mindestens einem Stoff aus der Gruppe Gelatine, Gummi arabicum, der Cellulosederivate, der Stärkederivate, der Natriumalginate, der Polyvinylalkohole und der Polyvinylpyrrolidone besteht. Sein Gehalt beträgt 10 bis 80 Gew.-%, vorzugsweise 25 bis 60 Gew.-%. Bevorzugt ist ein hüll- und strukturbildendes Material, das im wesentlichen aus einem durch Teilverseifung von Polyvinylacetat erhaltenen Polyvinylalkohols oder einem Gemisch solcher Polyvinylalkohole besteht. Es wird durch Verseifung, vorzugsweise Teilverseifung von Polyvinylacetat erhaltene Polyvinylalkohole oder deren Gemische mit einem Hydrolysegrad von vorzugsweise 72 bis 99 Mol-% und einer Viskosität von vorzugsweise 2 bis 18cP gemessen in 4%iger wäßriger Lösung bei 20°C (z.B. ®Mowiol-Typen) erhalten. Die für die vorliegende Erfindung bevorzugten Polyvinylalkohole weisen eine Molmasse von vorzugsweise 10000 bis 20000 auf. Sie werden hergestellt durch teilweise vorzugsweise 72 bis 99 Mol-%ige alkalische Verseifung von entsprechenden Polyvinylacetaten.

Bei Verwendung der genannten wasserlöslichen Materialien, insbesondere bei Verwendung bestimmter Polyvinylalkohol-Typen oder Gemischen derselben entstehen z.B. nach dem Wirbelschicht-Verfahren im Gegenstromprinzip in Wasser emulgierbare Granulate mit einem mittleren Partikeldurchmesser von 0,3 bis 5 mm, vorzugsweise 0,5 bis 2 mm, die nicht staubend, freifließend, volumetrisch gut dosierbar und in Wasser gut emulgierbar sind.

Als hochsiedende organische Lösungsmittel eignen sich vorwiegend hochsiedendeAromaten, wie z.B. 1- oder 2-Methylnaphthalin, Dimethylnaphthaline oder andere mehrkernige Aromaten. Geeignet sind aber auch andere mit Wasser nicht mischbare Lösungsmittel, z.B. Aromaten, wie Alkylbenzole, Xylole, Aliphaten, wie Paraffinöle, pflanzliche Öle, Alicyclen, Alkanole, wie Cyclohexanol, Isooctylalkohol, Ether, Ketone, wie Cyclohexanon, 4-Methylcyclohexanon, Isophoron, Ester, wie Benzoesäureethylester und Tri-n-butylphosphat. Flüssige pestizide Wirkstoffe können auch ohne organische Lösungsmittel eingesetzt werden. Der Gehalt an hochsiedendem Lösungsmittel oder Lösungsmittelgemisch beträgt 0 bis 80 %, vorzugsweise 20 bis 60 %.

Die Entschäumer sind auch wirksam, wenn sie den wäßrigen Spritzbrühen der Formulierungen vor deren Ausbringung zugesetzt werden.

Die Erfindung betrifft deshalb auch die Verwendung den festen Zubereitungen bei der Herstellung von flüssigen wäßrigen Zubereitungen oder Spritzbrühen, die die Bestandteile der beschriebenen festen Zubereitungen in etwa 50- bis 500-facher verdünnter Form enthalten.

Folgende Beispiele erläutern die Erfindung, ohne daß diese darauf beschränkt wäre. Die Prozentangaben beziehen sich auf das Gewicht.

### Beispiel 1

Glufosinat-ammonium 20 WG
- 20 %: Glufosinat-ammonium
- 40 %: ®Hostapur OS
- 39 %: Ammoniumsulfat
- 1 %: ®Fluowet PP
Die Herstellung des Granulates erfolgt gemäß DE-A-39 26 800 durch Aufsprühen einer wäßrigen Lösung von Glufosinat-ammonium auf die pulverförmige Mischung der verbleibenden Formulierungsbestandteile im Wirbelbett.

### Beispiel 2

Glufosinat-ammonium + Diuron (12 + 18) WG
- 12,0 %: Glufosinat-ammonium
- 18,2 %: Diuron, 99 %ig
- 16,0 %: ®Hostapur OS
- 12,0 %: ®Genapol LRO
- 5,0 %: ®Vanisperse CB
- 1,8%: ®Fluowet PP
- 35,0 %: Kaolin
Die Herstellung des Granulates erfolgt gemäß DE-A-39 26 800 aus einer wäßrigen Suspension mit 40 % Feststoffgehalt durch Granulierung im Wirbelbett. Die Suspension wird durch Feinstvermahlung sämtlicher Formulierungsbestandteile in Wasser mit Hilfe einer Perlmühle hergestellt.

### Beispiel 3

Isoproturon + Amidosulfuron (60 + 1,5) WP
- 60,61 %: IPU techn., 99%ig
- 1,56 %: Amidosulfuron techn., 96 %ig
- 10,00 %: ®Geropon SC 213
- 6,00 %: ®Texapon K12
- 21,00%: Kaolin 1777
- 0,83 %: ®Fluowet PP
Die Herstellung des Spritzpulvers erfolgt durch Vermahlung sämtlicher Formulierungsbestandteile auf einer Schlagkreuzmühle.

### Beispiel 4

Isoproturon + Amidosulfuron (75 + 1,5) WG
- 75,76 %: IPU techn., 99 %ig
- 1,56 %: Amidosulfuron techn., 96 %ig
- 10,00 %: ®Geropon SC213
- 6,00 %: ®Texapon K12
- 0,30 %: ®Forlanit P
- 5,20 %: Kaolin 1777
- 0,50 %: Siliconentschäumer SE2
- 0,68 %: ®Fluowet PP-Kalium
Die Herstellung des Granulates erfolgt durch Versprühen einer wäßrigen Suspension mit 50 % Feststoffgehalt mittels Einstoffdüse und Trocknung in einem konventionellen Sprühturm nach dem Gleichstromprinzip.

Die wäßrige Suspension wird durch Vermahlung sämtlicher Formulierungsbestandteile auf einer Perlmühle hergestellt.

### Beispiel 5

Amidosulfuron + Bromoxynil + Diflufenican (2,2 + 37,5 + 7,5) WG
- 40,32 %: Bromoxynil techn., 93 %ig
- 2,37 %: Amidosulfuron techn., 93 %ig
- 7,73 %: Diflufenican techn., 97 %ig
- 8,00 %: ®Geropon SC 213
- 4,00 %: ®Texapon K 12
- 2,00 %: ®Luviskol K 30
- 34,58 %: Kaolin 1777
- 0,50 %: Siliconentschäumer SE 2
- 0,25 %: Antifoam 416
- 0,25 %: ®Fluowet PP
Das Granulat wird aus einer wäßrigen Suspension mit 50 % Feststoffgehalt im Wirbelbett hergestellt. Zur Herstellung der wäßrigen Suspension werden mit Ausnahme des Antifoam 416 die Formulierungsbestandteile auf einer Perlmühle vermahlen und Antifoam 416 anschließend unter langsamem Rühren zugegeben.

### Beispiel 6

Amidosulfuron 50 WP
- 52,08 %: Amidosulfuron techn., 96 %ig
- 10,00 %: ®Tamol NNO
- 6,00 %: ®Texapon K 12
- 20,00 %: Kaolin 1777
- 11,40 %: ®Wessalon S
- 0,52 %: ®Fluowet PP
Die Herstellung des Spritzpulvers erfolgt durch Vermahlung sämtlicher Formulierungsbestandteile auf einer Schlagkreuzmühle.

### Beispiel 7

Carbendazim 80 WG
- 80,88 %: Carbendazim techn., 99 %ig
- 5,62 %: ®Tamol NNO
- 2,90 %: ®Mowiol 3/83
- 5,60 %: Stärke
- 0,2 %: ®Bronidox L
- 0,2 %: Siliconentschäumer SE 2
- 3,60 %: ®Forlanit P
- 1,00 %: ®Fluowet PP
Das Granulat wird durch Sprühtrocknung einer wäßrigen Suspension mit 55 % Feststoffgehalt in einem konventionellen Sprühtrockner hergestellt, die wäßrige Suspension durch Vermahlung sämtlicher Rezepturbestandteile auf einer Perlmühle.

### Beispiel 8

Fenoxaprop-P-ethyl + Fenchlorazol-ethyl (12 + 6) WEG
- 12,50 %: Fenoxaprop-P-ethyl techn., 96%ig
- 6,15 %: Fenchlorazol-ethyl techn., 97,6 %ig
- 43,50 %: ®Solvesso 200 (Exxon Chemical)
- 20,00 %: ®Mowiol 3/83
- 11,35 %: ®Mowiol 4/88
- 5,00 %: ®Hostapur OSB
- 0,50 %: ®Fluowet PP
- 1,00%: Restfeuchte
101 g eines durch Teilverseifung von Polyvinylacetat hergestellten Polyvinylalkohols mit einer Viskosität von 3 cP (gemessen in 4%iger wäßriger Lösung bei 20°C) und einem Hydrolysegrad von 83 Mol-% werden in 600 g Wasser gelöst und unter kräftigem Rühren werden 57,3 g eines ebenso hergestellten Polyvinylalkohols mit einer Viskosität von 4 cP und einem Hydrolysegrad von 88 Mol-% langsam zugegeben. Danach homogenisiert man die wäßrige Phase. In diese läßt man dann die Lösung von 63 g Fenoxaprop-P-ethyl und 31 g Fenchlorazol-ethyl in 220 g ®Solvesso 200 unter weiterem Rühren einfließen und erhöht dann die Drehzahl des Rührers, so daß die in der wäßrigen Phase entstehenden öligen Tröpfchen einen mittleren Durchmesser von 5 bis 10 µm haben.

Danach wird die entstandene Suspoemulsion in einem Labor-Wirbelbett-Trockner eingedüst. Das so erhaltene wasserdispergierbare Granulat hat einen Partikeldurchmesser von 0,5 bis 2 mm. Es bildet in Wasser eine stabile Suspoemulsion.

Die in den Beispielen 1 bis 8 aufgeführten Tenside und Hilfsstoffe sind bekannt und können bezogen werden von
- Hoechst AG: (®Hostapur OS, ®Genapol LRO, ®Mowiol)
- Henkel KG: (®Texapon K12, ®Forlanit P, ®Bromidox L)
- BASF: (®Tamol NNO, ®Luviskol K 30)
- Wacker Chemie GmbH: (Siliconentschäumer SE 2)
- Rhone-Poulenc: (®Geropon SC 213, Antifoam 416)
- Borregaard A.S.: (®Vanisperse CB)
- Exxon Chemical: (®Solvesso)

### Schaumtest

Ein mit Glasstopfen verschließbarer 1 l-Meßzylinder (Durchmesser: 5 cm) wird mit 500 ml Standardwasser D (342 ppm CaCO₃ Härte gemäß CIPAC Handbook I, S. 878) gefüllt. Nach Zugabe von 5 g Produkt wird der verschlossene Zylinder 10 mal um 180° und zurück gedreht. Unmittelbar danach wird die Zeit bis zum Zusammenbruch des gebildeten Schaumes gemessen.

### Ergebnis:

Bei Anwendung von Formulierungen, die die erfindungsgemäßen Entschäumer enthalten, verschwinden 90 % des Schaumes innerhalb von 2 bis 3 min., oft bricht der gesamte Schaum auch innerhalb von 1 min. zusammen.

Bei Anwendung von Formulierungen, die nach den in den Beispielen genannten Verfahren hergestellt werden, und die nicht die erfindungsgemäßen Entschäumer oder Entschäumer auf Siliconbasis enthalten, bleibt der Schaum oft über 30 min. stabil.

## Patentansprüche

1. Feste Zubereitung für den Einsatz im Pflanzenschutz, die mindestens einen Pflanzenschutzmittelwirkstoff, zusätzlich Netzmittel und mindestens einen Entschäumer aus der Gruppe der Perfluor-(C₆-C₁₈)-alkylphosphinsäuren und/oder Perfluor-(C₆-C₁₈)-alkylphosphonsäuren und/oder deren Salze enthält.

2. Feste Zubereitungen nach Anspruch 1, dadurch gekennzeichnet, daß der Anteil an Entschäumer 0,1 bis 10 Gew.-% beträgt.

3. Feste Zubereitung nach Anspruch 1 oder 2, dadurch gekennzeichnet, daß die enthaltenen Pflanzenschutzmittelwirkstoffe aus der Gruppe der Herbizide, Safener, Fungizide und/oder Insektizide sind.

4. Feste Zubereitung nach einem oder mehreren der Ansprüche 1 bis 3, dadurch gekennzeichnet, daß sie als Entschäumer Perfluor-(C₆-C₁₈)-alkylphosphinsäuren oder -alkylphosphonsäuren oder deren Alkalimetall-, Ammonium-, C₂-C₁₈-Alkylammoniumsalze oder deren Salze mit C₁₀-C₁₈-Alkylaminethoxylaten oder Ethylendiaminethoxylaten oder Mischungen der vorstehenden Entschäumer enthält.

5. Feste Zubereitung nach einem oder mehreren der Ansprüche 1 bis 4, dadurch gekennzeichnet, daß sie neben den genannten Bestandteilen weitere Formulierungshilfsstoffe, ausgewählt aus den Gruppen der Dispergiermittel, Agglomerationshilfen, Stabilisatoren und Füllstoffen enthält.

6. Feste Zubereitung nach einem der Ansprüche 1 bis 5, dadurch gekennzeichnet, daß diese ein Granulat ist.

7. Feste Zubereitung gemäß Anspruch 6, dadurch gekennzeichnet, daß diese ein wasseremulgierbares Granulat ist.

8. Feste Zubereitung nach einem der Ansprüche 1 bis 5, dadurch gekennzeichnet, daß diese ein Spritzpulver ist.

9. Verfahren zur Herstellung einer festen Zubereitung nach einem der Ansprüche 1 bis 8, dadurch gekennzeichnet, daß man die Pfanzenschutzmittelwirkstoffe zusammen mit den weiteren Komponenten vermahlt, und man ggf. daraus wäßrige Suspensionen herstellt, die man anschließend granuliert.

10. Verwendung einer festen Zubereitung nach einem der Ansprüche 1 bis 8 bei der Herstellung von flüssigen wäßrigen Zubereitungen oder Spritzbrühen.

## Claims

1. A solid formulation for use in crop protection which comprises at least one crop protection agent, in addition wetting agents and at least one antifoam from the group consisting of perfluoro-(C₆-C₁₈)-alkylphosphinic acids and/or perfluoro-(C₆-C₁₈)-alkylphosphonic acids and/or their salts.

2. The solid formulation as claimed in claim 1, wherein the antifoam content is 0.1 to 10% by weight.

3. The solid formulation as claimed in claim 1 or 2, wherein these crop protection agents are from the group consisting of herbicides, safeners, fungicides and/or insecticides.

4. The solid formulation as claimed in one or more of claims 1 to 3, which comprises, as antifoam, perfluoro-(C₆-C₁₈)-alkylphosphinic acids or perfluoro-(C₆-C₁₈)-alkylphosphonic acids or their alkali metal, ammonium or C₂-C₁₈-alkylammonium salts or their salts with C₁₀-C₁₈-alkylaminethoxylates or ethylenediamineethoxylates or mixtures of the above antifoams.

5. The solid formulation as claimed in one or more of claims 1 to 4, which comprises, in addition to the said constituents, further formulation auxiliaries selected from the groups consisting of dispersants, agglomeration auxiliaries, stabilizers and fillers.

6. The solid formulation as claimed in one of claims 1 to 5, which is granules.

7. The solid formulation as claimed in claim 6, which is water-emulsifiable granules.

8. The solid formulation as claimed in one of claims 1 to 5, which is a wettable powder.

9. A process for the preparation of a solid formulation as claimed in one of claims 1 to 8, which comprises grinding the crop protection agents together with the further components and, optionally, preparing an aqueous suspension therefrom, which is subsequently granulated.

10. The use of a solid formulation as claimed in one of claims 1 to 8 in the preparation of liquid aqueous formulations or spray mixtures.

## Revendications

1. Composition solide à utiliser dans le domaine phytosanitaire, qui contient au moins une substance active phytosanitaire, avec des agents mouillants et au moins un antimousse du groupe constitué par les acides (perfluoroalkyl en C₆-C₁₈)phosphiniques et/ou les acides (perfluoroalkyl en C₆-C₁₈)phosphoniques et/ou leurs sels.

2. Compositions solides selon la revendication 1, caractérisées en ce que leur teneur en antimousse est comprise entre 0,1 et 10 % en masse.

3. Composition solide selon la revendication 1 ou 2, caractérisée en ce que les substances actives phytosanitaires contenues appartiennent au groupe des herbicides, des safeners, des fongicides et/ou des insecticides.

4. Composition solide selon l'une ou plusieurs des revendications 1 à 3, caractérisée en ce qu'elle contient comme antimousses des acides (perfluoroalkyl en C₆-C₁₈)phosphiniques ou (perfluoroalkyl en C₆-C₁₈)phosphoniques ou leurs sels de métaux alcalins, d'ammonium, d'(alkyl en C₂-C₁₈)ammonium, ou leurs sels avec des (alkyl en C₁₀-C₁₈)aminoéthylates ou des éthylènediaminoéthylates ou des mélanges des antimousses précédents.

5. Composition solide selon l'une ou plusieurs des revendications 1 à 4, caractérisée en ce qu'elle contient, en plus des constituants cités, d'autres auxiliaires de formulation, choisis dans le groupe constitué par des agents dispersants, des agents d'agglomération, des stabilisants et des charges.

6. Composition solide selon l'une des revendications 1 à 5, caractérisée en ce qu'il s'agit d'un granulé.

7. Composition solide selon la revendication 6, caractérisée en ce qu'il s'agit d'un granulé émulsionnable dans l'eau.

8. Composition solide selon l'une des revendications 1 à 5, caractérisée en ce qu'il s'agit d'une poudre à pulvériser.

9. Procédé de préparation d'une composition solide selon l'une des revendications 1 à 8, caractérisé en ce que l'on broie les substances actives phytosanitaires avec les autres constituants et on en prépare éventuellement des suspensions aqueuses que l'on granule ensuite.

10. Utilisation d'une composition solide selon l'une des revendications 1 à 8 pour la préparation de compositions aqueuses liquides ou de bouillies de pulvérisation.
